# FASCICULE DE BREVET EUROPEEN

(11) **EP 1 957 295 B1**
(45) Date de publication et mention de la délivrance du brevet: **30.03.2016**
(21) Numéro de dépôt: 06831323.8
(22) Date de dépôt: 10.11.2006
(51) Int. Cl.: D04B 21/12, B60C 27/18

(54) **CHAINE D'ADHERENCE EN MATIERE TEXTILE POUR ROUE DE VEHICULE AUTOMOBILE**
TEXTILE GLEITSCHUTZKETTE FÜR FAHRZEUGREIFEN
TEXTILE CHAIN FOR IMPROVING THE ADHESION OF MOTOR VEHICLE WHEELS

(30) Priorité: 08.12.2005 FR 0553794
(43) Date de publication de la demande: 20.08.2008
(73) Titulaire: Joubert Production S.A.S., 63600 Ambert (FR)
(72) Inventeur: JOUBERT, Xavier, F-63600 Ambert (FR); JOUBERT, Bernard, F-63600 Ambert (FR)
(74) Mandataire: Cabinet Laurent & Charras
(86) Numéro de dépôt international: PCT/FR2006/051160
(87) Numéro de publication internationale: WO 2007/066022

(56) Documents cités:
- DE-A1- 1 605 718
- FR-A- 2 249 782
- GB-A- 162 932
- US-A- 3 934 633
- US-A- 5 961 754

## Description

### DOMAINE TECHNIQUE

L'invention concerne un dispositif propre à conférer l'adhérence pour une roue d'un véhicule automobile, notamment sur la neige. Un tel dispositif est classiquement dénommé "chaîne" en raison du fait que les différents dispositifs remplissant cette fonction, connus à ce jour, se présentent sous la forme de chaînes, le plus souvent métalliques, terme devenu de fait générique.

### ETAT ANTERIEUR DE LA TECHNIQUE

Les problèmes majeurs auxquels sont confrontés les utilisateurs de telles chaînes résident d'une part, dans leur pose sur les roues du véhicule en question et d'autre part, dans le poids relativement important des chaînes métalliques. Leur pose tout d'abord, s'effectue en raison même de la destination de ce produit dans des conditions généralement difficiles, puisque l'utilisateur attend traditionnellement le dernier moment, c'est-à-dire lorsqu'il n'a plus d'adhérence, pour procéder à leur mise en place, donc dans une épaisseur de neige souvent conséquente. Au surplus, la mise en place de ces chaînes s'avère laborieuse puisqu'il convient d'assurer le positionnement correct des moyens d'adhérence qu'elles définissent au niveau de la bande de roulement des roues en question, outre leur assujettissement correct à ce niveau, pour éviter lors de la rotation de la roue, l'escamotage intempestif des chaînes, ainsi que les bruits parasites qu'il ne manque pas de se produire.

Afin de s'affranchir de ces inconvénients, on a proposé, par exemple dans le document WO 00/59745 des chaînes du type en question, comportant une ceinture réalisée essentiellement en un matériau textile et propre à entourer la bande de roulement de la roue considérée. Cette ceinture textile est maintenue en place au moyen de parties latérales intérieure et extérieure souples. Dans ce document, la bande de roulement est constituée d'un treillis constitué de PVC revêtu d'un polyester et même de caoutchouc ou de polyuréthanne afin de conférer la résistance nécessaire au matériau textile mis en oeuvre.

Cependant, bien que présentant un gain de poids non négligeable par rapport aux chaînes traditionnelles, ces chaînes s'accompagnent corollairement d'une complexification du processus de réalisation affectant son coût de production.

On a également décrit dans le document FR 2 249 782 une chaîne d'adhérence constituée d'un filet, dont les cordons sont réticulés entre eux. On se heurte à des difficultés de réalisation en raison de l'étape de réticulation.

### BREVE DESCRIPTION DE L'INVENTION

L'objet de la présente invention est de proposer des chaînes dites "textile" s'affranchissant des inconvénients de l'art antérieur.

Cette chaîne d'adhérence pour roue de véhicule automobile comprend une bande d'adhérence destinée à venir au contact, au moins de la bande de roulement de la roue considérée, et maintenue en place au moyen de câbles tendeurs, respectivement externe et interne, ladite bande d'adhérence étant constituée d'un filet réalisé en matière textile.

Elle se caractérise en ce que le filet est constitué de cordons réalisés par tricotage, lesdits cordons étant assemblés entre eux également par tricotage, de telle sorte à définir les mailles dudit filet.

En d'autres termes, l'invention consiste à réaliser pour la bande d'adhérence des chaînes en question, un filet à base de cordons, notamment réalisés en polyester, en polyamide ou en un polymère à base de polyamide commercialisé sous la marque déposée CORDURA^{®} (Du Pont de Nemours) par tricotage, et à assembler de tels fils ou cordons également par tricotage, de telle sorte à définir des mailles, notamment de forme losange ou carré de 40 x 40 mm, propres à définir la bande d'adhérence.

Les cordons constitutifs du filet sont réalisés comme déjà dit par tricotage, de telle sorte à ce que leur enveloppe externe présente un diamètre moyen typiquement compris entre 3 et 7 mm.

Dans une version avantageuse de l'invention, le cordon le plus externe venant définir avec le cordon immédiatement adjacent les mailles externes des deux bords latéraux du filet est pourvu de propriétés élastiques. A cet effet, ce cordon est constitué d'une âme élastique, par exemple en caoutchouc, insérée simultanément au tricotage ou tricotée en combinaison avec les autres fibres constitutives des autres cordons, à savoir typiquement polyester, polyamide ou CORDURA^{®} formant gaine autour de cette âme élastique Ce faisant, ce bord élastique de la bande d'adhérence induit un froncement naturel de la chaîne favorisant sa pose.

Selon une première forme de réalisation de l'invention, le filet constitutif de la bande d'adhérence est fermé au moyen d'une sangle de fermeture, l'une des extrémités du câble tendeur interne étant solidarisée à la dite sangle, et l'autre extrémité étant transférée au niveau de la face externe après avoir transité dans les mailles du bord considéré dudit filet. La sangle de fermeture intègre à cet effet une goulotte, avantageusement rigide, favorisant la tension du câble tendeur interne depuis l'extérieur.

Selon un autre mode de réalisation de l'invention, le filet est ouvert, ses deux extrémités étant stabilisés au moyen de zones terminales fixées ou rapportées par couture ou soudure. Dans cette configuration, l'une desdites zones terminales est munie d'un crochet ou de tout moyen équivalent, venant coopérer avec un anneau ménagé à cet effet au niveau de la zone terminale antagoniste. Corollairement, le câble tendeur externe traverse lesdites zones terminales du coté opposé après avoir transité dans les mailles du bord externe du filet, au niveau d'un orifice traversant et stabilisé, pour permettre sa tension, l'une des extrémités dudit câble tendeur étant également munie d'un crochet ou d'un organe équivalent, propre à permettre sa fixation réversible au niveau de l'une des mailles externes du bord latéral correspondant du filet ou d'un anneau dédié à cet effet solidarisé au filet.

Selon une troisième forme de réalisation de l'invention, le filet constitutif de la bande d'adhérence est également fermé, là encore au moyen d'une sangle de fermeture. Selon cette configuration, le bord interne du filet destiné à venir se positionner au niveau de la face interne de la roue est muni d'un câble - tendeur élastique, susceptible de présenter une capacité à l'allongement voisine de 120 %. Parallèlement, le bord externe du filet destiné à venir se positionner au niveau de la face externe de la roue est muni d'un câble ou cordon rigide, donc non élastique, destiné à bloquer le filet une fois en place sur la roue, ledit blocage étant en outre susceptible d'être doublé au moyen de sangles croisées, dont le nombre (2 à 4) est fonction des dimensions de la roue, sangles dont les extrémités sont solidarisées au niveau du bord externe dudit filet. De plus, les sangles sont solidarisées les unes aux autres sensiblement en leur milieu, c'est à dire au niveau de leur lieu de croisement.

La manière dont l'invention peut être réalisée et les avantages qui en découlent ressortiront mieux des exemples de réalisation qui suivent donnés à titre indicatif et non limitatif à l'appui des figures annexées.

### BREVE DESCRIPTION DES DESSINS

La figure 1 est une représentation schématique en perspective d'une roue munie d'une chaîne textile conforme à une première forme de réalisation de l'invention, dont la figure 2 est une vue de face de la face externe, et la figure 3 une vue partielle de face de la face interne.
Les figures 4, 5 et 6 sont des vues analogues aux figures 1 à 3 selon une seconde forme de réalisation de l'invention.
La figure 7 est une représentation schématique de la face extérieure de la roue munie d'une chaîne textile conforme au mode de réalisation décrit en relation avec les figures 4 à 6, mais illustrant un mode particulier de mise en place et de tension des câbles - tendeurs/
La figure 8 est une représentation schématique en section transversale partielle d'une forme particulière de réalisation du filet conforme à l'invention.
La figure 9 illustre un autre mode de réalisation de l'invention, mettant également en oeuvre un filet fermé/

### DESCRIPTION DETAILLEE DE L'INVENTION

Dans le cadre de la présente invention, et en lien direct avec la description et les revendications, par convention, on désignera par face interne (2) de la roue (1), la face au niveau de laquelle aboutit l'essieu ou le cardan, et la face externe (3) de la roue, celle directement visible sans manipulation quelconque, et susceptible de recevoir par exemple, un enjoliveur.

La chaîne d'adhérence conforme à l'invention comporte fondamentalement une bande d'adhérence (5), destinée à venir en contact intime avec la bande de roulement (4) du pneumatique dont est munie la roue que l'on souhaite équiper.

Selon l'invention, cette bande d'adhérence (5) est constituée d'un filet réalisé en matière textile, et définissant un certain nombre de mailles (6), lesdites mailles étant destinées à former autant de crampons, propres à assurer l'adhérence recherchée sur une surface glissante, et notamment sur la neige.

En d'autres termes, les mailles ainsi définies forment saillies, dont la hauteur typique par rapport à la bande de roulement (4) du pneumatique est de l'ordre de 3 à 7 mm.

Ce filet est constitué par tricotage de cordons (7), eux-mêmes obtenus par tricotage. Selon une caractéristique de l'invention, l'opération de tricotage des cordons (7) et du filet (5) proprement dit est réalisée simultanément, par exemple sur des métiers à tricoter MULLER, et plus précisément sur une machine à tricoter à section carrée double fonture GWM ou sur une machine à tricoter à section ronde simple fonture RD3MT3.

Les cordons (7) sont réalisés comme déjà dit par tricotage, et comporte chacun plusieurs brins, et par exemple de 3 à 10, le diamètre souhaité du cordon étant obtenu par tricotage et serrage desdits brins entre eux.

Les cordons (7) sont réalisés en polyester ou en polyamide, tel que le polyamide commercialisé sous la marque CORDURA^{®} par la société Du Pont de Nemours. Ce matériau présente l'avantage de combiner une résistance mécanique élevée, de bonnes propriétés d'adhérence, notamment sur la neige et surtout une résistance à l'abrasion également élevée.

Lors de l'opération de tricotage, il est ainsi défini des mailles (6), dont les dimensions sont sensiblement standardisées (typiquement 40 x 40 mm), qui lorsque le filet en question est tendu sur la roue du véhicule automobile, présentent une forme carrée ou en losange, tel qu'on peut bien l'observer sur les différentes figures.

Le filet ainsi constitué est défini par deux bords latéraux (8, 9), respectivement interne (8) et externe (9), destinés à venir se rabattre de part et d'autre de la bande de roulement (4) de la roue considérée (1). Corollairement, ces bords latéraux sont sollicités pour assurer le positionnement et le maintien de la chaîne textile ainsi réalisée au niveau de ladite roue.

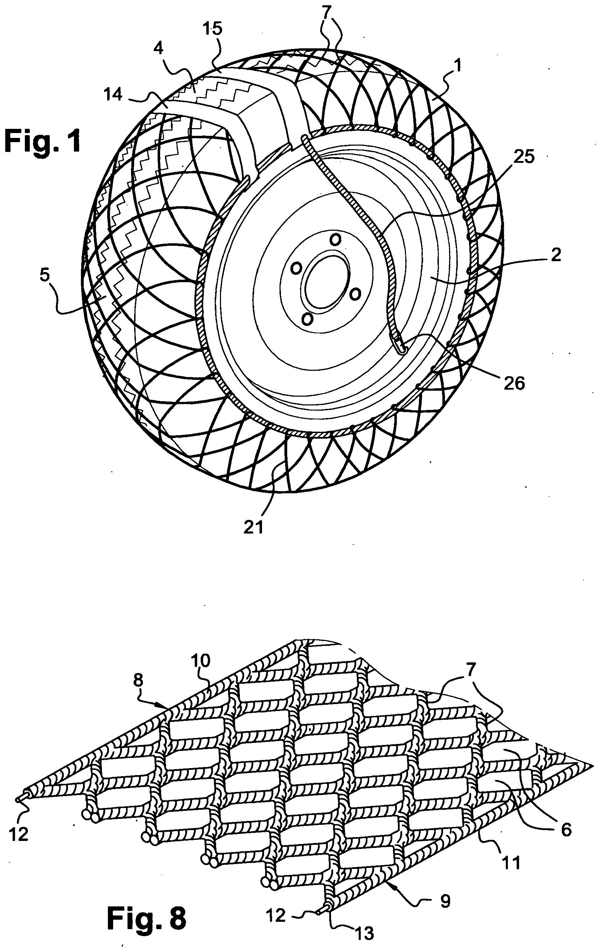

Avantageusement, les cordons les plus externes (10) et (11) définissant les mailles les plus latérales du filet, sont constitués d'une âme réalisée en un matériau élastique, typiquement du caoutchouc (12), enveloppée par une gaine (13) en un matériau synthétique analogue à celui constitutif des autres cordons (7). Ce faisant, en l'absence de contraintes externes, le filet, notamment au niveau interne, va froncer naturellement, favorisant la pose de la chaîne voir figure 8).

Bien évidemment, ces bords élastiques (8, 9) ne sont en aucun cas destinés à remplacer les câbles tendeurs décrits ci-après, toujours en place, pour assurer le positionnement et le maintien pérenne de la chaîne au niveau de la roue.

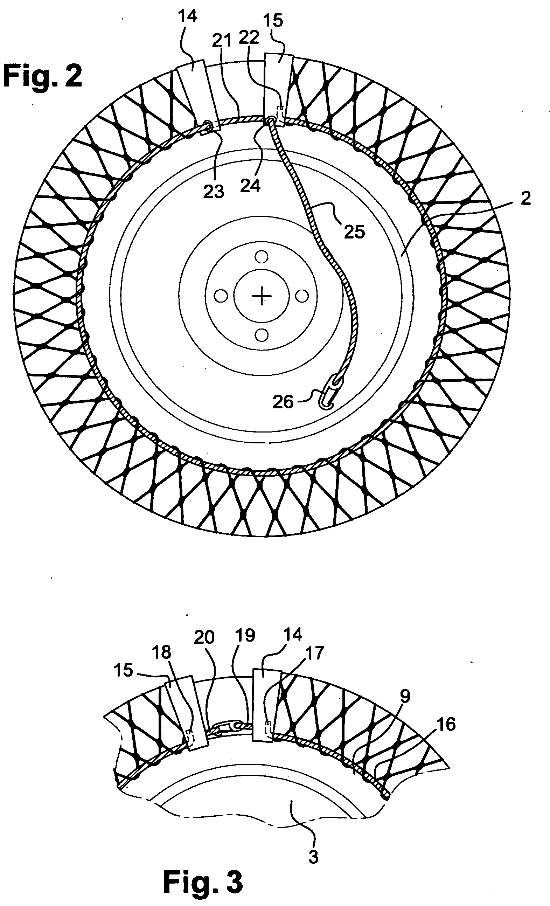

Selon une première forme de réalisation de l'invention, représentée en relation avec les figures 1 à 3, le filet est ouvert, c'est à dire, qu'il ne constitue pas une structure fermée circulaire.

Selon cette configuration, les deux extrémités dudit filet sont chacune stabilisées au moyen d'une bande tissée (14, 15), également réalisée en polyester ou polyamide.

Les mailles du bord interne (9) du filet reçoivent un câble tendeur non élastique (16), dont les extrémités (17, 18) sont solidarisées au niveau du bord de chacune des deux bandes stabilisatrices (14, 15).

En outre, l'une (14) desdites bandes est pourvue d'un crochet (19), venant coopérer avec un anneau (20), solidarisé à l'autre bande (15), et ce, également sensiblement au niveau du bord interne de chacune desdites bandes.

Dans cette forme de réalisation, l'autre bord latéral (10) du filet (5), donc destiné à être rabattu au niveau de la face externe (3) de la roue (1), reçoit également un câble tendeur (21) destiné à assurer la tension et le positionnement correct de la chaîne sur la roue, et interdisant également le « déchaussement » de la chaîne hors de la roue.

L'une (22) des extrémités dudit câble tendeur (21) est solidarisée à la bande (15), et l'autre brin, après avoir transité dans les mailles du bord externe dudit filet, vient transiter par un orifice traversant (23) ménagé au sein de l'autre bande (14), puis par un orifice (24) ménagé au sein de la bande (15) pour assurer la tension effective de la bande d'adhérence. Ces orifices traversants sont stabilisés, par exemple au moyen d'un oeillet métallique Une fois le câble (21) effectivement tendu, donc après positionnement effectif et correct du dispositif d'adhérence sur la roue considérée, le brin en question est renvoyé éventuellement au niveau d'un ou de plusieurs anneaux émanant du bord externe (10) du filet, éventuellement issu de tricotage, et l'extrémité (25) dudit brin en question munie d'un crochet (26) est fixée soit au niveau de l'un de ces anneaux, soit au niveau de l'une des mailles dudit bord externe.

Avantageusement, le crochet (26) est pourvu d'un linguet, permettant à ce dernier de ne pas s'accrocher dans les mailles pendant les manipulations de la chaîne, et s'opposant au surplus au décrochement intempestif dudit crochet lorsque le câble en question est tendu.

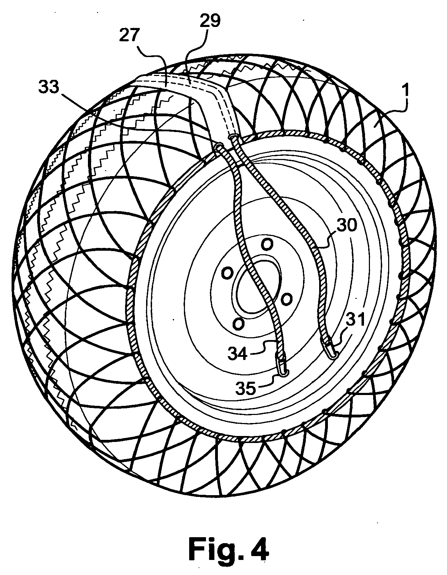

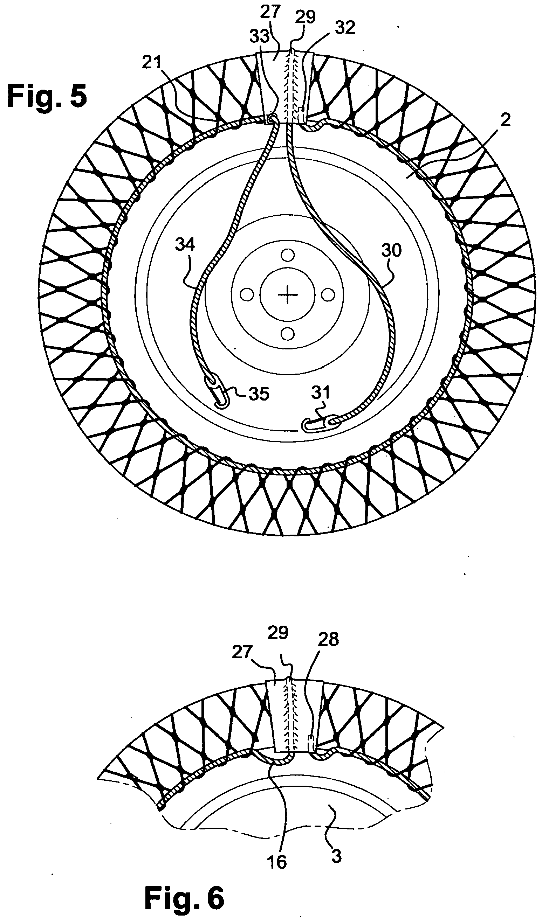

Selon une autre forme de réalisation de l'invention (figures 4, 5 et 6), le filet est fermé au moyen d'une sangle (27) dite de fermeture, également réalisée en polyester ou en polyamide. Cette sangle est fixée par soudure, couture etc.

Selon cette configuration, l'une (28) des extrémités du câble tendeur interne (16) est solidarisée au niveau interne de ladite sangle, ledit câble traversant les différentes mailles du bord interne du filet, décrivant ainsi sensiblement un cercle entier, avant d'être renvoyé au niveau de la face externe par transit au sein d'une gaine ou goulotte rigide (29) ménagée au sein de la sangle (27). Son autre extrémité (30) est pourvue d'un crochet de tension et de fixation (31). La rigidité de la goulotte (29) a pour effet de maintenir le point interne de serrage à l'intérieur de la roue sous la bande de roulement simplement en la poussant de l'extérieur. En l'absence d'une telle goulotte rigide, le point de jonction du câble - tendeur interne (16) à la sangle de fermeture (27) à tendance à remonter sensiblement au niveau de la bande de roulement (4) de la roue lors du serrage dudit câble.

Corollairement, l'une (32) des extrémités du câble tendeur externe (21) est solidarisée au niveau externe de la sangle (27). Ledit câble traverse les mailles du bord externe du filet, puis rejoint ladite sangle (27) qu'il traverse au niveau d'un orifice traversant (33) prévu à cet effet, également stabilité au moyen d'un oeillet ou d'une pièce plastique ou d'un simple passage. Son extrémité libre (34) est également pourvue d'un crochet de tension et de fixation (35). Les deux crochets (31) et (35) sont destinés à coopérer avec des anneaux ménagés à cet effet au niveau dudit bord externe du filet (5) ou directement avec les mailles dudit bord externe.

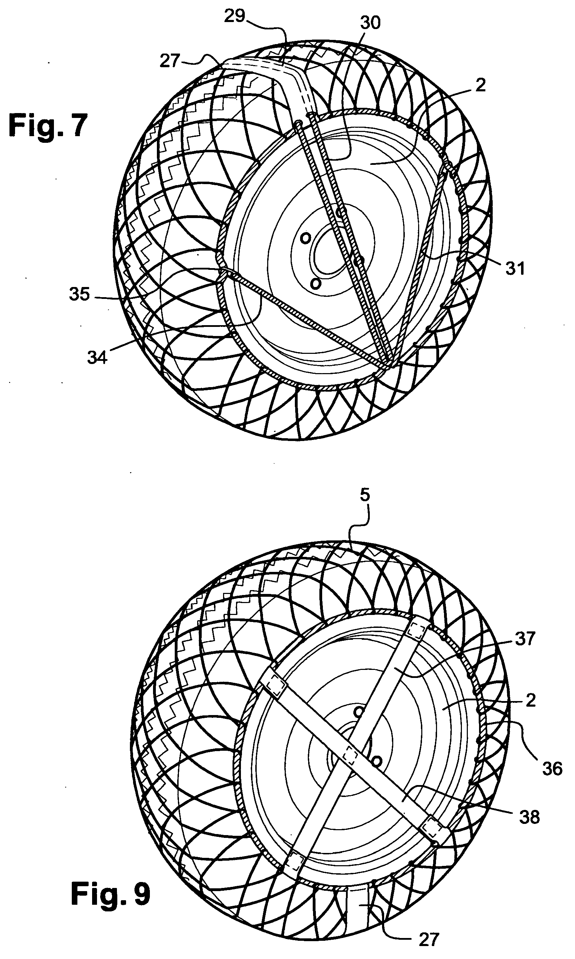

On a représenté au sein de la figure 9 un mode particulier de tension des câbles interne (16) et externe (21). Ainsi, l'extrémité libre de chacun de ces deux câbles est tendue à l'aplomb de la sangle de fermeture (27) et est renvoyée, après passage dans l'une des mailles du bord externe (9) opposée à ladite sangle, au niveau de deux mailles, sensiblement symétriques l'une de l'autre par rapport au trajet diamétral desdites extrémités en sortie de sangle. Cette configuration permet notamment d'éviter tout risque de pénétration du filet à l'intérieur du passage de roue par blocage mécanique.

Selon un troisième mode de réalisation de la chaîne textile conforme à l'invention, plus particulièrement illustré sur la figure 9, et mettant également en oeuvre un filet fermé, notamment au moyen d'une sangle de fermeture (27), le bord interne (8) dudit filet destiné à être rabattu sur la face interne (3) de la roue est muni d'un câble - tendeur élastique. Celui-ci est susceptible de présenter une capacité à l'allongement voisine de 120 %, propre à permettre le positionnement effectif de la chaîne nonobstant la fermeture de la bande d'adhérence (le filet (5)) qui la constitue, c'est à dire le recouvrement de la bande de roulement (4) de la roue considérée, outre le positionnement correct de la chaîne et sa tension suffisante pour lui permettre de remplir sa fonction.

Parallèlement, le bord externe (9) du filet (5), destiné à venir se rabattre sur la face externe (2) de la roue est muni d'un câble ou cordon rigide (36), donc non élastique, destiné à bloquer le filet une fois en place sur la roue.

En d'autres termes, on enfile littéralement le filet sur la roue, en jouant sur l'élasticité du câble - tendeur interne élastique.

Afin d'optimiser le blocage du filet sur la roue, on munit la chaîne de plusieurs sangles croisées (37, 38), dont le nombre (entre 2 et 4) est fonction des dimensions de la roue (37, 38), et dont les extrémités sont solidarisées au niveau du bord externe (9) dudit filet. De plus, ces sangles sont solidarisées entre elles sensiblement en leur milieu, c'est à dire au niveau de lieu de croisement. Ces sangles croisées s'étendent donc au dessus de la face externe (2) de la roue.

On conçoit ce faisant, que quelle que soit la forme de réalisation mise en oeuvre de la chaîne de l'invention, on dispose d'une chaîne d'adhérence, venant plaquer de manière optimisée contre la bande de roulement (4) du pneumatique considéré. On évite ainsi que la chaîne ne se déchausse du pneumatique, et ce jusqu'à une vitesse relativement conséquente, et notamment supérieure à 50 km/h.

Au surplus, la mise en oeuvre d'un filet textile tricoté permet outre de conférer un gain de poids considérable, facilite la mise en place de ces chaînes, et confère au pneumatique une adhérence optimisée sur des chaussées glissantes, notamment recouverte de neige.

## Revendications

1. Chaîne d'adhérence pour roue (1) de véhicule automobile comprenant une bande d'adhérence (5) destinée à venir au contact au moins de la bande de roulement (4) de la roue considérée, et maintenue en place au moyen de câbles tendeurs, respectivement externe (21) et interne (16), ladite bande d'adhérence étant constituée d'un filet réalisé en matière textile, ***caractérisée* en ce que** le filet (5) est constitué de cordons (7) réalisés par tricotage, lesdits cordons étant assemblés entre eux également par tricotage de telle sorte à définir les mailles (6) dudit filet.

2. Chaîne d'adhérence pour roue (1) de véhicule automobile selon la revendication *1,* ***caractérisée* en ce que** les cordons (7) constitutifs du filet (5) sont réalisés par tricotage de plusieurs brins, de telle sorte à ce que leur enveloppe externe présente un diamètre moyen typiquement compris entre 3 et 7 mm.

3. Chaîne d'adhérence pour roue (1) de véhicule automobile selon l'une des revendications 1 et 2, ***caractérisée* en ce que** les cordons (7) constitutifs du filet (5) sont réalisés en polyester ou en polyamide.

4. Chaîne d'adhérence pour roue (1) de véhicule automobile selon l'une des revendications 1 à 3, ***caractérisée* en ce que** le cordon le plus externe (10, 11) venant définir avec le cordon immédiatement adjacent les mailles externes des deux bords latéraux (8, 9) du filet (5) est pourvu de propriétés élastiques, de telle sorte à induire un froncement naturel de la chaîne propre à favoriser sa pose.

5. Chaîne d'adhérence pour roue (1) de véhicule automobile selon la revendication *4,* ***caractérisée* en ce que** ledit cordon (10, 11) est constitué d'une âme élastique (12), typiquement en caoutchouc, insérée ou tricotée en combinaison avec les autres fibres constitutives des autres cordons.

6. Chaîne d'adhérence pour roue (1) de véhicule automobile selon l'une des revendications 1 à 5, ***caractérisée* en ce que** le filet (5) constitutif de la bande d'adhérence est'fermé au moyen d'une sangle de fermeture (27), l'une (28) des extrémités du câble - tendeur interne (16) étant solidarisée à la dite sangle, et l'autre extrémité (30) étant transférée au niveau de la face externe (2) de la roue après avoir transité dans les mailles du bord interne considéré dudit filet (5), la sangle de fermeture (27) intégrant à cet effet une goulotte (29), avantageusement rigide, favorisant la tension du câble tendeur interne depuis l'extérieur.

7. Chaîne d'adhérence pour roue (1) de véhicule automobile selon la revendication *6,* ***caractérisée* en ce que** le filet (5) est également tendu au moyen d'un câble tendeur externe (21), dont l'une (32) des deux extrémités est solidarisée à ladite sangle de fermeture (27), et dont l'autre converge également au niveau de la sangle de fermeture (27) après avoir traversé les mailles ménagées au niveau bord externe (9) du filet, afin de permettre sa tension et la solidarisation du filet sur la roue considérée.

8. Chaîne d'adhérence pour roue (1) de véhicule automobile selon l'une des revendications 1 à 5, ***caractérisée* :**
• **en ce que** le filet (5) constitutif de la bande d'adhérence est fermé au moyen d'une sangle de fermeture (27),
• **en ce que** le bord interne (8) dudit filet (5) destiné à venir se rabattre sur la face interne (3) de la roue est muni d'un câble - tendeur élastique,
• et **en ce que** le bord externe (9) dudit filet (5), destiné à venir se rabattre sur la face externe de la roue est muni d'un câble ou cordon rigide (36), destiné à bloquer le filet une fois en place sur la roue.

9. Chaîne d'adhérence pour roue (1) de véhicule automobile selon la revendication *8, **caractérisée*** le câble - tendeur élastique présente une capacité à l'allongement voisine de 120 %.

10. Chaîne d'adhérence pour roue (1) de véhicule automobile selon l'une des revendications 8 et 9, ***caractérisée* en ce qu'**aux fins d'optimiser le blocage du filet (5) sur la roue, on munit la chaîne de plusieurs sangles croisées (37, 38), dont les extrémités sont solidarisées au niveau du bord externe (9) dudit filet, et s'étendant au dessus de la face externe (2) de la roue.

11. Chaîne d'adhérence pour roue (1) de véhicule automobile selon la revendication 10, ***caractérisée* en ce que** les sangles (37, 38) sont solidarisées entre elles au niveau de leur lieu de croisement.

12. Chaîne d'adhérence pour roue (1) de véhicule automobile selon l'une des revendications 1 à 5, ***caractérisée* en ce que** le filet (5) constitutif de la bande d'adhérence est ouvert, ses deux extrémités étant stabilisés au moyen de zones terminales (14, 15) fixées ou rapportées par couture ou soudure, l'une desdites zones terminales étant munie d'un crochet (19) ou de tout moyen équivalent, venant coopérer avec un anneau (20) ménagé à cet effet au niveau de la zone terminale antagoniste.

13. Chaîne d'adhérence pour roue (1) de véhicule automobile selon la revendication *12,* ***caractérisée* en ce que** le câble tendeur externe (21) traverse lesdites zones terminales du coté opposé à la zone de coopération du crochet (19) et de l'anneau (20) après avoir transité dans les mailles du bord externe (11) dudit filet, au niveau d'un orifice traversant (24) pour permettre sa tension effective, l'une (25) des extrémités dudit câble tendeur externe (21) étant munie d'un crochet (26) ou d'un organe équivalent, propre à permettre sa fixation réversible au niveau de l'une des mailles externes du bord latéral correspondant du filet ou d'un anneau dédié à cet effet solidarisé au filet.

## Patentansprüche

1. Schneekette für ein Rad (1) eines Kraftfahrzeugs, die aus einer Haftfläche (5) besteht, die in Kontakt mit mindestens der Lauffläche (4) des jeweiligen Rades kommt und die mittels Spannseilen, jeweils außen (21) und innen (16) an Ort und Stelle gehalten werden, wobei die genannte Haftfläche aus einem Netz aus textilem Material (16) besteht, **dadurch gekennzeichnet, dass** dieses Netz (5) aus gewirkten Schnüren (7) besteht, wobei diese Schnüren wiederum miteinander verstrickt sind, so dass sie die Maschen (6) dieses Netzes bilden.

2. Schneekette für ein Rad (1) eines Kraftfahrzeugs gemäß Anspruch 1, **dadurch gekennzeichnet, dass** die Schnüren (7), die das Netz (5) bilden, durch Verstricken mehrerer Stränge ausgeführt sind, so dass die äußere Hülle einen durchschnittlichen Durchmesser zwischen 3 und 7 mm aufweist.

3. Schneekette für ein Rad (1) eines Kraftfahrzeugs gemäß einem der Ansprüche 1 und 2, **dadurch gekennzeichnet, dass** die Schnüren (7), die das Netz (5) bilden, aus Polyester oder Polyamid bestehen.

4. Schneekette für ein Rad (1) eines Kraftfahrzeugs gemäß einem der Ansprüche 1 und 3, **dadurch gekennzeichnet, dass** die am weitesten außen liegende Schnur (10, 11), die zusammen mit der unmittelbar danebenliegenden Schnur, die äußeren Maschen der beiden Seitenränder (8, 9) des Netzes (5) bilden, mit elastischen Eigenschaften versehen ist, was dazu führt, dass sich die Kette am Rand zusammenzieht, was die Montage erleichtert.

5. Schneekette für ein Rad (1) eines Kraftfahrzeugs gemäß Anspruch 1, **dadurch gekennzeichnet, dass** diese Schnur (10, 11) eine elastische Seele (12), typischerweise aus Kautschuk, enthält, die eingelegt oder in Kombination mit den anderen Fasern, die auch die anderen Schnüren bilden, verstrickt ist.

6. Schneekette für ein Rad (1) eines Kraftfahrzeugs gemäß einem der Ansprüche 1 bis 5, **dadurch gekennzeichnet, dass** das Netz (5), das die Haftfläche bildet, mit einem Verschlussgurt (27) verschlossen ist, wobei eines (28) der Enden des inneren Spannseils (16) an diesem Gurt befestigt ist und das andere Ende (30) wird auf die Außenseite (2) des Rades gebracht ist, indem es durch die Maschen des betrachteten Innenrandes des genannten Netzes (5) geführt wird, wobei der Verschlussgurt (27) zu diesem Zweck einen am besten starren Kanal (29) umfasst, der die Spannung des inneren Spannseils von außen erleichtert.

7. Schneekette für ein Rad (1) eines Kraftfahrzeugs gemäß Anspruch 6, **dadurch gekennzeichnet, dass** das Netz (5) ebenfalls mittels eines Außenspannseils (21) gespannt wird, wobei eines (32) der beiden Enden mit diesem Verschlussgurt (27) verbunden ist und das andere ebenfalls zum Verschlussgurt (27) hin läuft, nachdem es durch die am Außenrand (9) des Netzes vorgesehenen Maschen geführt wurde, um die Spannung des Netzes und die feste Verbindung auf dem betrachten Rad zu ermöglichen.

8. Schneekette für ein Rad (1) eines Kraftfahrzeugs gemäß einem der Ansprüche 1 bis 5, **dadurch gekennzeichnet, dass**:
• das Netz (5), das die Haftfläche bildet, mit einem Verschlussgurt (27) geschlossen wird,
• dass der Innenrand (8) dieses Netzes (5), der sich um die Innenseite (3) des Rades legen soll, mit einem elastischen Spannseil versehen ist;
• und dass der Außenrand (9) dieses Netzes (5), der sich um die Außenseite des Rades legen soll, mit einem starren Seil oder Schnur (36) versehen ist, das oder die das Netz blockieren soll, sobald es auf dem Rad montiert ist.

9. Schneekette für ein Rad (1) eines Kraftfahrzeugs gemäß Anspruch 8, **dadurch gekennzeichnet, dass** das elastische Spannseil eine Dehnfähigkeit von ungefähr 120 % aufweist.

10. Schneekette für ein Rad (1) eines Kraftfahrzeugs gemäß einem der Ansprüche 8 oder 9, **dadurch gekennzeichnet, dass** zwecks Optimierung des Feststellens des Netzes (5) auf dem Rad die Kette mit mehreren überkreuzten Gurten (37, 38) ausgerüstet wird, deren Enden am Außenrand (9) dieses Netzes befestigt sind und die bis zur Außenseite (2) des Rades reichen.

11. Schneekette für ein Rad (1) eines Kraftfahrzeugs gemäß Anspruch 8, **dadurch gekennzeichnet, dass** die Gurte (37, 38), dort wo sie sich überkreuzen, aneinander festgemacht sind.

12. Schneekette für ein Rad (1) eines Kraftfahrzeugs gemäß einem der Ansprüche 1 bis 5, **dadurch gekennzeichnet, dass** das Netz (5), das die Haftfläche bildet, offen ist, wobei seine beiden Enden mittels Endzonen (14, 15) stabilisiert, befestigt oder durch Naht oder Verschweißung übereinander gelegt sind, wobei eine der genannten Endzonen mit einem Haken (19) oder jedem anderen gleichwertigen Mittel versehen ist, das in einen Ring (20) greift, der zu diesem Zweck innerhalb seines Gegenstücks vorgesehen ist.

13. Schneekette für ein Rad (1) eines Kraftfahrzeugs gemäß Anspruch 12, **dadurch gekennzeichnet, dass** das äußere Spannseil (21) durch diese Endzonen, von dem Bereich aus, der dem Kooperationsbereich von Haken (19) und Ring (20) gegenüber liegt, nachdem es durch die äußeren Randmaschen (11) dieses Netzes geführt wurde, in Höhe einer durchführenden Öffnung (24) verläuft, um eine effiziente Spannung zu erreichen, wobei eines (25) der Enden dieses Außenspannseils (21) mit einem Haken (26) oder einem gleichwertigen Mittel versehen ist, das geeignet ist, um eine lösbare Befestigung an einer der Außenmaschen des entsprechenden seitlichen Randes des Netzes oder einem zu diesem Zweck vorgesehenen, am Netz befestigten Ring zu erlauben.

## Claims

1. The adhesion chain for a motor vehicle wheel (1), comprising an adhesion tread (5) intended to be in contact with at least the tread (4) of the wheel concerned, and kept in place by means of respectively external (21) and internal (16) tensioning cables, said adhesion tread consisting of a net made from textile material, **characterized in that** said net (5) consists of cords (7) prepared by knitting, said cords also being joined together by knitting so as to define the meshes (6) of said net.

2. The adhesion chain for a motor vehicle wheel (1) as claimed in claim 1, **characterized in that** the cords (7) forming net (5) are made by knitting together several strands, so that their outer envelope has an average diameter typically included between 3 and 7 mm.

3. The adhesion chain for a motor vehicle wheel (1) as claimed in one of claims 1 and 2, **characterized in that** the cords (7) forming net (5) are made of polyester or polyamide material.

4. The adhesion chain for a motor vehicle wheel (1) as claimed in one of claims 1 to 3, **characterized in that** the outermost cord (10, 11) which, with the immediately adjacent cord, defines the outer meshes of the two lateral edges (8, 9) of net (5) has elastic properties, conducive to obtaining the natural gathering of the chain, propitious to favouring its installation.

5. The adhesion chain for a motor vehicle wheel (1) as claimed in claim 4, **characterized in that** said cord (10, 11) comprises an elastic core (12), typically of rubber, inserted or knitted in conjunction with the other component fibres of the other cords.

6. The adhesion chain for a motor vehicle wheel (1) as claimed in one of claims 1 to 5, **characterized in that** net (5) forming the adhesion tread is closed by means of a closure strap (27), while one end (28) of internal tensioning cable (16) is made integral with said strap, and the other end (30) is transferred to the outer face (2) of the wheel after having passed through the meshes of the inner edge in question of said net (5), while the closure strap (27) incorporates for this purpose a channel (29), preferably rigid, favouring the tensioning of the internal tensioning cable from the outside.

7. The adhesion chain for a motor vehicle wheel (1) as claimed in claim 6, **characterized in that** net (5) is also tensioned by means of an external tensioning cable (21), of which one (32) of the two ends is made integral with the said closure strap (27), and of which the other end also converges on closure strap (27), after having passed through the meshes arranged on the outer edge (9) of the net, to permit its tensioning and the integrating of the net on the wheel in question.

8. The adhesion chain for a motor vehicle wheel (1) as claimed in one of claims 1 to 5, **characterized in that**:
the net (5) constituting the adhesion tread is closed by means of a closure strap (27),
an inside edge (8) of said net (5) intended to be folded back on the inside (3) of the wheel is provided with an elastic tensioning cable,
and an outer edge (9) of said net (5), intended to be folded back on the outside of the wheel is provided with a rigid cable or cord (36), intended to lock the net once in place on the wheel.

9. The adhesion chain for a motor vehicle wheel (1) as claimed in claim 8, **characterized in that** the elastic tensioning cable has an elongation capacity close to 120%.

10. The adhesion chain for a motor vehicle wheel (1) as claimed in one of claims 8 and 9, **characterized in that** to optimize the locking of net (5) on the wheel, the chain is provided with several cross-laid straps (37, 38), the ends of which are made integral on the outer edge (9) of said net, and extend above the outer face (2) of the wheel.

11. The adhesion chain for a motor vehicle wheel (1) as claimed in claim 10, **characterized in that** the straps (37, 38) are made integral with each other at their crossing point.

12. The adhesion chain for a motor vehicle wheel (1) as claimed in one of claims 1 to 5, **characterized in that** net (5) forming the adhesion tread is open with its two ends stabilized by means of terminal areas (14, 15), attached or secured by stitching or welding, with one of the said terminal areas being provided with a hook (19) or any equivalent means, working together with a ring (20) arranged for this purpose in the facing terminal area.

13. The adhesion chain for a motor vehicle wheel (1) as claimed in claim 12, **characterized in that** the external tensioning cable (21) passes through the said terminal areas on the side opposite the area working with hook (19) and with ring (20) after passing through the meshes of the outer edge (11) of the said net, via a through hole (24), to ensure its effective tensioning, with one end (25) of said external tensioning cable (21) being provided with a hook (26) or an equivalent device, capable of ensuring its reversible attachment to one of the external meshes of the corresponding lateral edge of the net or of a ring dedicated to the purpose, made integral with the net.
